# EUROPÄISCHE PATENTSCHRIFT

(11) **EP 0 756 703 B1**
(45) Veröffentlichungstag und Bekanntmachung des Hinweises auf die Patenterteilung: **13.05.1998**
(21) Anmeldenummer: 95917354.3
(22) Anmeldetag: 21.04.1995
(51) Int. Cl.: G01N 15/02, G08B 17/107

(54) **VORRICHTUNG ZUR MESSUNG DER LICHTSTREUUNG AN PARTIKELN**
DEVICE FOR MEASURING LIGHT SCATTER BY PARTICLES
DISPOSITIF DE MESURE DE LA DISPERSION DE LA LUMIERE PAR DES PARTICULES

(30) Priorität: 22.04.1994 DE 4414166
(43) Veröffentlichungstag der Anmeldung: 05.02.1997
(73) Patentinhaber: GERHARD LORENZ Innovative Technik + Messgerätebau, 37191 Katlenburg-Lindau (DE)
(72) Erfinder: LORENZ, Gerhard, D-37191 Katlenburg-Lindau (DE)
(74) Vertreter: Patentanwälte Rehberg + Hüppe
(86) Internationale Anmeldenummer: EP9501521
(87) Internationale Veröffentlichungsnummer: WO9529393

(56) Entgegenhaltungen:
- EP-A- 0 463 795
- WO-A-93/08461
- DE-A- 3 334 545
- PATENT ABSTRACTS OF JAPAN vol. 17, no. 48 (P-1477) 29. Januar 1993 & JP,A,04 260 197 (MATSUSHITA ELECTRIC WORKS) 16. September 1992 in der Anmeldung erwähnt

## Beschreibung

Die Erfindung bezieht sich auf eine Vorrichtung zur Messung der Lichtstreuung an in einem Trägermedium suspendierten Partikeln zur Ermittlung der Dichte, der Größe oder der Größenverteilung der Partikel nach dem Oberbegriff des Anspruchs 1.

Die Streulichtmessung ist neben der Lichtabsorbtionsmessung ein allgemein bekanntes Verfahren, um in Luft, aber auch in anderen Gasen, oder auch in lichtdurchlässigen Flüssigkeiten, wie beispielsweise Wasser, suspendierte Partikel nachzuweisen und die Dichte, die Größe oder die Größenverteilung der Partikel zu bestimmen. Dabei wird Licht von einer monochromatischen oder polychromatischen Lichtquelle auf das Trägermedium gerichtet. Der Lichtstrahl trifft auf die in dem Trägermedium suspendierten Partikel und wird anschließend vorzugsweise in einer Lichtfalle absorbiert. Trifft der Lichtstrahl auf ein Partikel, so lenkt dieses einen Bruchteil des Lichts als sogenanntes Streulicht aus seiner ursprünglichen Richtung ab. Ein lichtempfindlicher Empfänger mißt die Intensität des Streulichts. Der räumliche Überschneidungsbereich, der sowohl von den Lichtstrahlen der Lichtquelle als auch von dem Gesichtsfeldwinkel des Empfängers erfaßt wird, wird hier als Streulichtzentrum bezeichnet.

Die JP 4-260 197 A in US-Z: Patent Abstracts of Japan, Section P, Vol 17/No. 48 (1993) P-1477 zeigt eine Vorrichtung, bei der zur Ermittlung der Größe (Durchmesser) von in einem Trägermedium suspendierten Partikeln Lichtstrahlen aus zwei Lichtquellen zeitlich nacheinander gepulst auf ein gemeinsames Streulichtzentrum gerichtet werden. Den beiden Lichtquellen ist ein gemeinsamer Empfänger zugeordnet, dessen Achse auf das Streulichtzentrum gerichtet ist. Die beiden Lichtquellen können so angeordnet sein, daß sie ihre Lichtstrahlen in unterschiedlichen Winkeln zu der Achse des Empfängers aussenden. Die beiden Lichtquellen sind so angeordnet, daß der Empfänger das Streulicht in Vorwärtsrichtung empfängt. Die vom gemeinsamen Empfänger abgegebenen Signale werden einer Auswerteeinrichtung mit einer Steuereinrichtung für den zeitlichen Ablauf der gepulsten Lichtstrahlen nacheinander zugeleitet.

Es bleibt offen, ob und ggf. wie das Trägermedium fließt oder geleitet wird. Die Einrichtung ist auch so dargestellt, daß kein besonderes Gehäuse vorgesehen ist, so daß insoweit die Probleme, die mit der Entstehung von Streulicht an einer Gehäuseinnenwand verbunden sind und/oder die dadurch beeinflußte Genauigkeit der Messung nicht angesprochen sind.

Die DE 38 31 654 Al zeigt und beschreibt einen optischen Rauchmelder mit einer stark lichtabsorbierenden Meßkammer. Mit geringem Aufwand soll verhindert werden, daß die durch Verschmutzung der Meßkammer verursachte Streustrahlung zu einem Fehlalarm führt. Zu diesem Zweck wird in einer gehäuseartigen Meßkammer ein zweiter zusätzlicher lichtempfindlicher Empfänger angewendet, dessen Gesichtsfeld auf eine Fläche der Meßkammer gerichtet ist, die von einer der Lichtquellen bestrahlt wird. Mit diesem zweiten Empfänger wird ein Vergleichswert ermittelt, der dem über die Zeit ansteigenden Verschmutzungsgrad des Gehäuses entspricht und der in einer Steuerschaltung entsprechend berücksichtigt wird, um die negativen Folgen eines sich verändernden Streustrahlungsuntergrunds in dem Gehäuse auf die Genauigkeit der Messung auszuschalten.

Auch die DE 33 34 545 Al zeigt einen optischen Rauchmelder mit zwei symmetrisch zur Achse eines Empfängers angeordneten Lichtquellen, die ihre Lichtstrahlen in einem spitzen Winkel zu der Achse des Empfängers aussenden, so daß hier das Streulicht als Rückwärtsstrahlung empfangen wird. Die beiden Lichtquellen und der Empfänger sind in einem Gehäuse untergebracht, welches zwei Öffnungen besitzt, durch die die Lichtstrahlen der Lichtquellen austreten können, so daß damit das Problem vagabundierender reflektierter Streulichtstrahlung gelöst wird, ohne daß viele Blenden eingesetzt werden. Das Trägermedium mit den Partikeln kann zugleich durch eine der Öffnungen in das Gehäuse eingebracht werden.

Weitere Vorrichtungen wurden von Bol, Roth und Wurzbacher "Erfassung und Untersuchung kolloider Luft- und Abwasser-verunreinigungen durch Streulichtmessung", veröffentlicht in Batellebericht 1969, Seiten 23 - 29, beschrieben. Dabei wird eine einzige Lichtquelle in Form eines Lasers eingesetzt, dessen Lichtstrahl durch eine Linsen/Blenden-Kombination auf ein Streulichtzentrum gerichtet wird. Das Streulichtzentrum wird quer unter 90° von dem mit den Partikeln beladenen Trägermedium durchströmt. Der Lichtstrahl wird in einer Lichtfalle aufgefangen. Über Umlenkspiegel und weitere Linsen und Blenden wird das im Streulichtzentrum an dem Partikel entstehende Streulicht über Umlenkspiegel einem Empfänger zugeführt, der als Sekundärelektronenvervielfacher ausgebildet ist. Mit dieser bekannten Vorrichtung kann die Größe der in dem Trägermedium suspendierten Partikel bestimmt werden. Die Vorrichtung arbeitet in Vorwärtsrichtung des Lichtstrahls, d. h. von dem Empfänger wird das in Vorwärtsrichtung in einem relativ kleinen Winkel zu der Achse des Lichtstrahles abgestrahlte Streulicht aufgenommen. Die Intensität des an einem Partikel entstehenden Streulichts ist winkelabhängig. Hier spielt die Größe der Partikel eine wesentliche Rolle. Für Partikel, die wesentlich größer als die Wellenlänge des Lichtstrahles sind, wird fast alles Streulicht in Vorwärtsrichtung ausgesandt. Rückwärtsstreuung findet praktisch nicht statt. Die größte Intensität wird bei relativ kleinen Winkeln des Streulichts zur Vorwärtsrichtung des Lichtstrahles festgestellt. Für Partikel, deren Größe vergleichbar mit der Wellenlänge ist, findet eine Vorwärtsstreuung und eine vergleichsweise weniger intensive Rückwärtsstreuung statt. Der Streulichtkegel in Vorwärtsrichtung ist jedoch kürzer und breiter als der Streulichtkegel von Partikeln, deren Durchmesser wesentlich größer als die Wellenlänge ist. Für Partikel, deren Durchmesser schließlich wesentlich kleiner als die Wellenlänge des Lichtstrahles ist, gilt schließlich, daß das Streulicht mit gleicher Intensität in alle Raumrichtungen ausgestrahlt wird. Die bekannte Vorrichtung arbeitet mit einer einzigen Lichtquelle und deren Lichtstrahl feststehender Wellenlänge, wobei der Winkel, in welchem der Empfänger relativ zur Richtung des Lichtstrahles angeordnet ist, ebenfalls festliegt. Die bekannte Vorrichtung ist für unterschiedliche Größen oder Größenverteilung der Partikel daher mehr oder weniger brauchbar. Die Meßgenauigkeit ist in vielen Fällen nicht hinreichend.

Der Erfindung liegt die Aufgabe zugrunde, ein Verfahren und eine Vorrichtung bereitzustellen, mit dem die Dichte, die Größe und/oder die Größenverteilung der in einem Trägermedium suspendierten Partikel ermittelt werden können, und dies trotz Verwendung einfach aufgebauter Elemente mit einer hohen Genauigkeit über einen relativ großen Bereich unterschiedlicher Durchmesser und Konzentrationen der Partikel. Die Vorrichtung soll also einfach aufgebaut und preiswert herstellbar sein.

Erfindungsgemäß wird dies mit den Merkmalen des Patentanspruchs 1 erreicht. Dabei wird unter Anwendung einfachster baulicher Maßnahmen ein Einfluß vagabundierender Streustrahlung in der Detektionskammer auf das Meßergebnis unterbunden. Der Empfänger ist zwar innnerhalb des Gehäuses untergebracht, doch ist er in Richtung der Mittelachse der gestreckt ausgebildeten Detektionskammer quasi in ein schwarzes Loch hinter dem Streulichtzentrum gerichtet. So sind bei der neuen Vorrichtung eine Verschmutzung der Wandung des Gehäuses, eine Lichtquelle, die ihre Lichtstrahlen nicht ausschließlich auf das Streuzentrum bündelt, und eine nicht vollständige Absorption der Lichtstrahlen nach dem Austritt aus dem Streuzentrum unkritisch. Dies läßt die Verwendung kostengünstiger Bauelemente insbesondere bei dem Gehäuse und der Lichtquelle zu.

Der innerhalb des Gehäuses angeordnete Empfänger ist nicht unbedingt ein das Streulicht in ein normalerweise elektrisches Signal umwandelnder Photosensor, sondern zwingend nur die das in das Signal umzuwandelnde Streulicht sammelnde Einrichtung. Diese Einrichtung zum Sammeln des Streulichts und damit der Empfänger im engeren Sinne der Erfindung kann beispielsweise auch die Eintrittsfläche eines Lichtleiters sein, der das gesammelte Streulicht zu einem außerhalb des Gehäuses angeordneten Photosensor leitet.

Die gestreckt ausgebildete Detektionskammer ist vorzugsweise achsen- oder rotationssymmetrisch zu ihrer Mittelachse ausgebildet. Im Idealfall ist sie rund und wird dann von einem im Querschnitt runden Rohrabschnitt als Gehäuse begrenzt, wodurch sich die neue Vorrichtung preiswert herstellen läßt.

Die erfindungsgemäße Blendenanordnung kann auch optische Blenden, d. h. Linsen, umfassen. Linsen sind als Bestandteil der Blendenanordnung jedoch weder erforderlich noch bevorzugt, da sie den baulichen Aufwand der neuen Vorrichtung unnötig erhöhen.

Bevorzugte Ausführungsformen der neuen Vorrichtung sind in den Unteransprüchen beschrieben.

In einer Weiterentwicklung baut die Erfindung auf der bekannten Erkenntnis auf, nicht nur Lichtstrahlen von einer einzigen Lichtquelle, sondern Lichtstrahlen von mehreren Lichtquellen zu verwenden und diese zeitlich nacheinander gepulst, d. h. für eine festgelegte Zeitdauer, auf getrennte oder ein gemeinsames Streulichtzentrum zu richten. Dafür können bei der neuen Vorrichtung relativ einfach ausgebildete Lichtquellen Verwendung finden, die sehr preiswert sind und die ihrerseits keine Linsen/Blenden-Kombination benötigen. Diesen mehreren Lichtquellen bzw. deren Lichtstrahlen ist vorzugsweise nur ein einziger Empfänger zugeordnet, wobei es möglich ist, unterschiedliche Relativanordnungen zwischen den Lichtstrahlen jeder einzelnen Lichtquelle und der Achse des Empfängers zu realisieren.

Es kann sowohl die Vorwärts streuung wie auch die Rückwärtsstreuung erfaßt werden. Die somit zeitlich nacheinander entstehenden Streulichtimpulse an dem oder den Partikeln werden von dem gemeinsamen Empfänger aufgenommen, abgespeichert und ausgewertet, wobei es darauf ankommt, die Zuordnung des Lichtimpulses zwischen der jeweiligen Lichtquelle und dem jeweiligen Streulichtimpuls festzuhalten. Damit ist es möglich, in verschiedenen Winkelrelationen das jeweilige Streulicht aufzunehmen. Je nach Anwendungsfall können einzelne Relationen zwischen den Lichtquellen und dem Empfänger ausgewählt werden. Bei völlig unbekannter Partikelgröße und unbekannter Größenverteilung sollten alle Lichtquellen betrieben werden. Damit kann praktisch der gesamte Winkelbereich abgedeckt werden, und es ist möglich, gleichsam ein Universal-Streulichtmeßgerät zu bauen, welches die Vorteile der verschiedenen bisher bekannten Individual-Streulichtmeßgeräte kombiniert, die entweder in bestimmten Vorwärtsbereichen oder in bestimmten Rückwärtsbereichen messen.

Von besonderem Vorteil ist es, wenn dabei Lichtstrahlen aus unterschiedlichen Winkeln und/oder unterschiedlicher Wellenlängen auf die getrennten Streulichtzentren bzw. das gemeinsame Streulichtzentrum gerichtet werden. Es versteht sich, daß auch hier die Streulichtimpulse zeitlich nacheinander versetzt von dem gemeinsamen Empfänger aufgenommen werden.

Es können Lichtstrahlen aus monochromatischem Licht verwendet werden, also beispielsweise Laserdioden.

Der zeitliche Verlauf der gepulsten Lichtstrahlen erfolgt bei einem gemeinsamen Streulichtzentrum vorzugsweise schnell im Vergleich zu der Strömungsgeschwindigkeit des Trägermediums mit den Partikeln durch das Streulichtzentrum. Auf diese Weise wird es möglich, eine ganze Serie von Lichtstrahlen auf einen Partikel zu schicken und die Streulichtimpulse von diesem einen Partikel aufzunehmen.

Bei mehreren Streulichtzentren sind deren räumlicher und zeitlicher Abstand hinsichtlich der Abfolge der Lichtstrahlen vorzugsweise auf die Strömungsgeschwindigkeit mit des Trägermediums mit den Partikeln durch die Detektionskammer abgestimmt.

Mit der neuen Vorrichtung ist so in an sich bekannter Weise eine Vielzahl von Lichtstrahlen von Lichtquellen in Zuordnung zu einem einzigen Empfänger nutzbar, wobei unterschiedliche Relativanordnungen im Raum zwischen Lichtquelle und Empfänger in einfacher Weise verwirklicht werden können. Der Empfänger nimmt nun wiederum nur einen Teil des im Streulichtzentrums entstehenden Streulichts auf, d. h. der Gesichtsfeldwinkel des Empfängers erfaßt einen engen Raumwinkelbereich des aus dem Streulichtzentrum emittierten Streulichts.

Die Lichtquellen können nicht nur in einer Mehrzahl, sondern auch in unterschiedlichen Winkeln zu der Achse des Empfängers angeordnet sein, wenn dies für den jeweiligen Anwendungsfall sinnvoll erscheint. Es ist auch möglich, eine Universalvorrichtung zu bauen, bei der wahlweise nur ein Teil der verwirklichten Lichtquellen oder auch alle Lichtquellen genutzt werden können. Es sind insbesondere monochromatische Lichtquellen vorgesehen, die gepulste Lichtstrahlen unterschiedlicher Wellenlängen aussenden. Auch hierbei kann durch die Steuereinrichtung eine Auswahl der Nutzung der Lichtquellen erfolgen, die für den jeweiligen Anwendungsfall sinnvoll sind.

Als Lichtquellen können insbesondere Laserdioden oder Leuchtdioden vorgesehen sein. Auch eine Kombination beider Lichtquellen kann bei bestimmten Anwendungsfällen sinnvoll sein.

In der gestreckt ausgebildeten Detektionskammer können auch zwei gemeinsame Empfänger vorgesehen sein, die einander entgegengesetzt auf das Streulichtzentrum gerichtet sind, sodaß sie das im Streulichtzentrum entstehende Streulicht einer einzigen Lichtquelle in Vorwärtsrichtung einerseits und in Rückwärtsrichtung andererseits aufnehmen können. Beide Empfänger schauen - zwar einander entgegengerichtet - in Richtung der Achse und damit gleichsam in ein schwarzes Loch. Vagabundierende Streulichtstrahlung und/oder reflektierte Lichtstrahlung kann sich auch bei zwei Empfängern normalerweise nicht nachteilig auf die Genauigkeit auswirken, sofern sie nicht gerade von dem jeweils gegenüberliegenden Empfänger reflektiert wird. Die Anzahl der notwendigen Lichtquellen kann bei den zwei gegeneinander ausgerichteten Empfängern halbiert werden. Die Aufnahme des Streulichts kann mit den beiden Empfängern auch gleichzeitig erfolgen, wobei beide Impulse freilich unterschieden werden müssen und in der Regel auch getrennt weiterverarbeitet werden.

Die Erfindung wird anhand von Ausführungsbeispielen der neuen Vorrichtung weiter erläutert und beschrieben. Es zeigt:
- Figur 1: eine schematisierte Relativanordnung der Lichtquelle zu dem Empfänger in der Detektionskammer;
- Figur 2: eine erste schematisierte Relativanordnung mehrerer Lichtquellen zu dem Empfänger in der Detektionskammer;
- Figur 3: eine zweite schematisierte Relativanordnung mehrerer Lichtquellen zu dem Empfänger in der Detektionskammer;

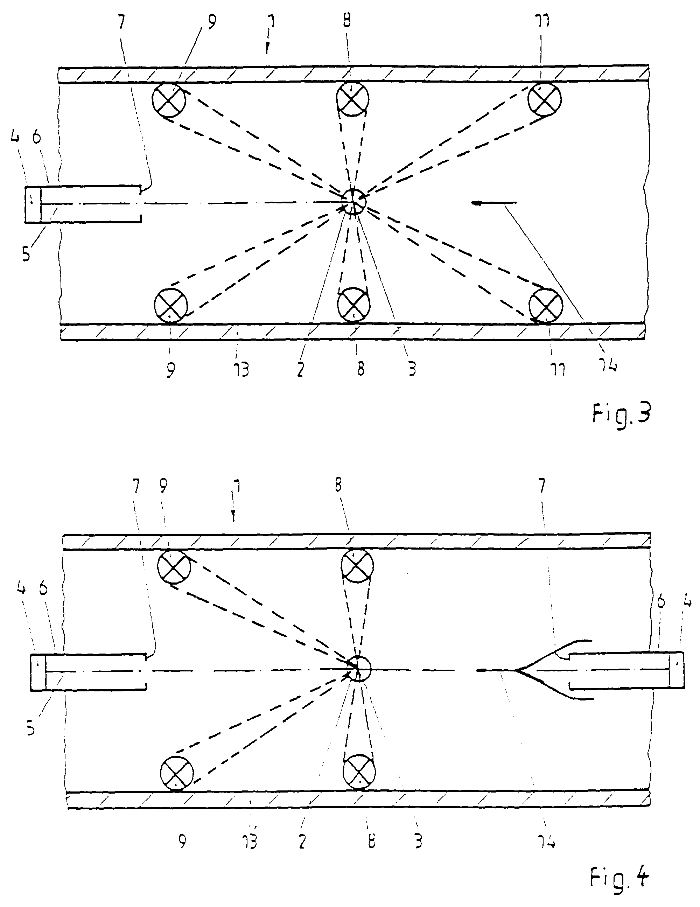

- Figur 2: eine schematisierte Relativanordnung mehrerer Lichtquellen zu zwei Empfängern in der Detektionskammer;
- Figur 3: ein Blockschaltbild einer Auswerteeinrichtung in Verbindung mit der Vorrichtung gemäß Figur 3 zur Realisierung eines Rauchmelders;
- Figur 4: ein Blockschaltbild zur Realisierung eines Aerosolphotometers für die Filterprüfung und

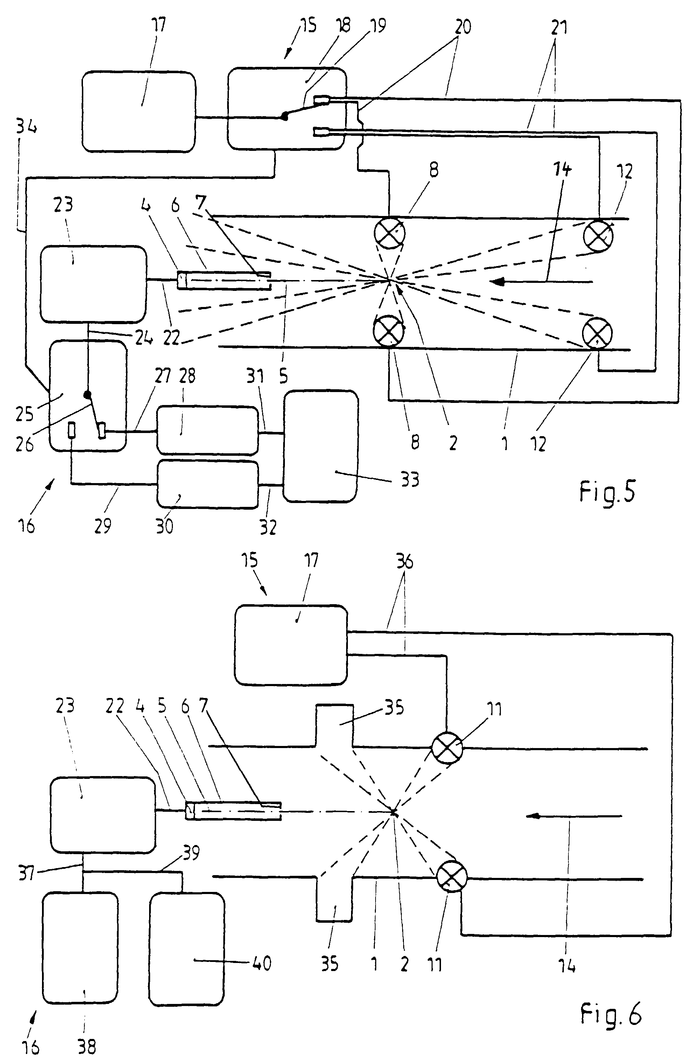

- Figur 5: ein Blockschaltbild für ein Universal-Streulichtmeßgerät.

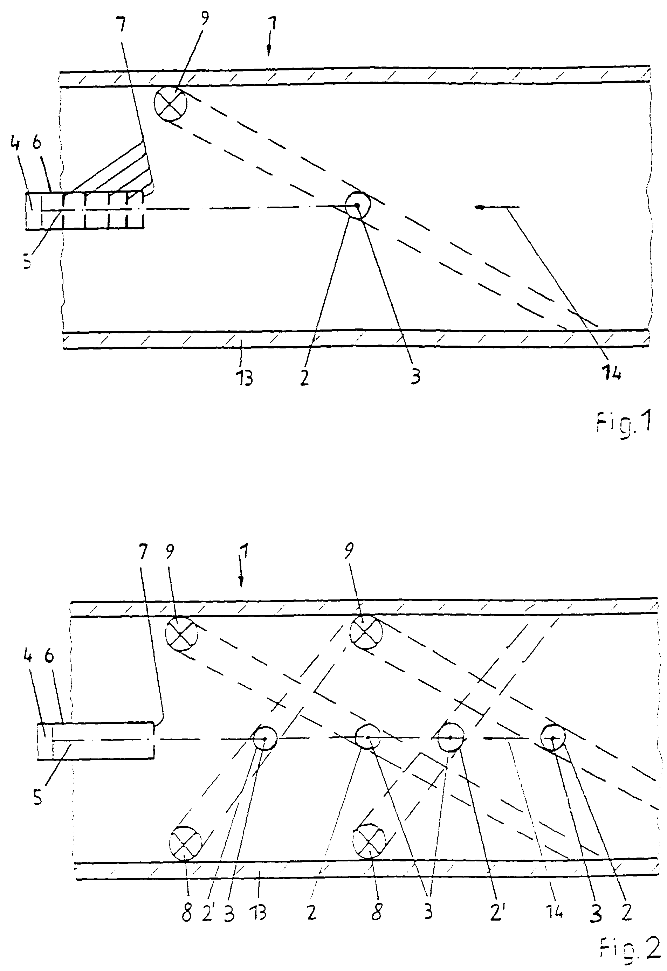

In Figur 1 ist ein rohrförmiges Gehäuse 1 dargestellt, dessen Wandung eine gestreckt ausgebildete Detektionskammer in radialer Richtung zu der Mittelachse der Detektionskammer begrenzt. Auf der Mittelachse der Detektionskammer befindet sich ein Streulichtzentrum 2, in dessen Mittelpunkt oder irgendwo innerhalb des Streulichtzentrums 2 sich ein Partikel 3 befinden möge. Ein Trägermedium, in dem das Partikel 3 suspendiert ist, durchströmt das rohrförmige Gehäuse 1 parallel zu der Mittelachse in Richtung des Pfeils 14.

Koaxial zu der Mittelachse der Detektionskammer ist ein Empfänger 4 angeordnet, so daß seine Achse 5 auf das Streulichtzentrum 2 gerichtet ist. Der Empfänger 4 ist in einem Empfängergehäuse 6 aufgenommen, in welchem dem Streulichtzentrum 2 zugekehrt Blenden 7 angeordnet sind, um das Gesichtsfeld des am anderen Ende des Empfängergehäuses 6 vorgesehenen Empfängers entsprechend so zu beschränken, daß es die Wandung des Gehäuses 1 nicht erfaßt. Wenn in den Figuren 2 bis 7 nur eine oder zwei Blenden über das Empfängergehäuse verteilt wiedergegeben sind, so gilt auch hier die Beschränkung des Gesichtsfelds des Empfängers auf einen engen Bereich um die Mittelachse der Detektionskammer.

Dem Empfänger 4 ist gemäß Figur 1 eine einzige Lichtquelle 9 zugeordnet, deren Lichtstrahlen das Gesichtsfeld des Empfängers 4 in dem Streulichtzentrum 2 schneiden.

Gemäß Figur 2 sind 4 Lichtquellen 8 und 9 vorgesehen, deren Lichtstrahlen das Gesichtsfeld des Empfängers 4 in vier Streulichtzentren 2 und 2' schneiden. Dabei ist der Winkel zwischen den Lichtstrahlen der Lichtquellen 9, die das Gesichtsfeld in den Streulichtzentren 2 schneiden, und der Achse des Sensors jeweils gleich ebenso wie der Winkel zwischen den Lichtstrahlen der Lichtquellen 8, die das Gesichtsfeld in den Streulichtzentren 2' schneiden.

Gemäß Figur 3 ist in Zuordnung zu dem einzigen Empfänger 4 über den Umfang des rohrförmigen Gehäuses 1 verteilt eine Vielzahl von Lichtquellen vorgesehen, deren Lichtstrahlen auf ein gemeinsames Streulichtzentrum 2 gerichtet sind. Es sind zwei Lichtquellen 8 vorgesehen, deren auf das Streulichtzentrum 2 gerichtete Achsen der Lichtstrahlen senkrecht zu der Achse 5 des Empfängers 4 und zu der Achse des rohrförmigen Gehäuses 1 angeordnet sind. Zwei weitere Lichtquellen 9 sind in einem spitzen Winkel für die Rückwärtsstreulichtmessung vorgesehen; dies bedeutet, daß der Empfänger 4 Streulichtimpulse der Rückwärtsstreuung in einem spitzen Winkel aufnimmt, relativ zu der Richtung der von den Lichtquellen 9 auf das Streulichtzentrum 2 ausgesandten Lichtstrahlen. Es können weitere Lichtquellen über die Wandung des rohrförmigen Gehäuses 1 verteilt angeordnet sein, die ebenfalls der Erfassung des rückwärtsgerichteten Streulichts dienen. Gleichsam auf der anderen Seite der durch die Ebene der Lichtstrahlen der Lichtquellen 9 aufgespannten Ebene sind zwei weitere Lichtquellen 11 vorgesehen, die einen Teil des Vorwärtsstreulichtes empfangen. Dies bedeutet, daß die Achse der von den Lichtquellen 11 auf das Streulichtzentrum 2 ausgesandten Lichtstrahlen in Vorwärtsrichtung mit der Achse 5 des Empfängers 4 einen weiteren Winkel bildet. Es können auch auf dieser Seite weitere Lichtquellen vorgesehen sein. Diese dienen ebenfalls der Erfassung des Vorwärtsstreulichtes. Es versteht sich, daß die Intensität des zu dem Empfänger 4 gelangenden Streulichts für jeden Streulichtwinkel dadurch erhöht werden kann, daß die Anzahl der Lichtquellen 8, 9 oder 11 erhöht wird. Für jeden Winkel bzw. Winkelbereich lassen sich eine Vielzahl von Lichtquellen entweder gleicher oder verschiedener Wellenlänge rotationssymmetrisch zu der Achse 5 des Empfängers 4 anordnen.

Das Gehäuse 1 ist, wie dargelegt, von einem Rohrabschnitt 13 gebildet, welcher in Richtung eines Pfeiles 14 von dem Trägermedium mit den darin schwebenden Partikeln durchströmt wird. Obwohl in den Figuren 2 und 3 nur jeweils zwei Lichtquellen 8, 9 oder 11 dargestellt sind, versteht es sich, daß entlang der Wandung oder über den Umfang des Rohrabschnittes 13 in der jeweiligen Ebene eine Mehrzahl von jeweiligen Lichtquellen 8, 9 oder 11 angeordnet sein können. Die Achse 5 des Empfängers 4 bildet zugleich die Mittelachse der von dem Rohrabschnitt 13 begrenzten Detektionskammer. Die Lichtquellen 8, 9, 11 sind auf getrennte oder ein gemeinsames Streulichtzentrum 2 gerichtet. Dabei werden zumindest bei unterschiedlichen Lichtquellen oder unterschiedlichen Winkeln der Lichtstrahlen zu der Achse 5 des Empfängers 4 die Lichtquellen 8, 9, 11 in einer festgelegten Reihenfolge ein- bzw. ausgeschaltet, um Lichtimpulse auf die Streulichtzentren 2 zu erzeugen und Streulichtimpulse von den Streulichtzentren 2 auf den Empfänger 4 aufnehmen und auswerten zu können.

Zu den in den Figuren 1 bis 3 dargestellten Elementen der Vorrichtung gehört eine nicht dargestellte Auswerteeinrichtung, die dem Empfänger 4 nachgeordnet ist. Im einfachsten Fall, wenn mit der Vorrichtung die Konstanz der Partikelkonzentration oder der Größenverteilung der Partikel in dem Trägermedium zu überwachen ist, z. B. in der Funktion als Rauchmelder, oder wenn die Vorrichtung zur Messung der Abscheideleistung von Schwebstoff-Filtern benutzt wird, genügt ein relativ träger Umschalter als Bestandteil der Auswerteeinrichtung, mit dem auch bestimmte Kombinationen der Lichtquellen 8, 9, 11 eingeschaltet werden können. Es kann insoweit eine Streulichtmessung durchgeführt werden, bei der nur die Lichtquellen 8 eingeschaltet sind. Es kann alternativ eine Streulichtmessung in Vorwärtsrichtung erfolgen, wenn nur die Lichtquellen 11 betrieben werden. Bei einer Streulichtmessung in Rückwärtsrichtung werden nur die Lichtquellen 9 betrieben. Auch Kombinationen der Lichtquellen können ausgewählt und so betrieben werden.

Figur 4 zeigt eine modifizierte Anordnung. Es sind hier zwei Empfänger 4 mit ihren Empfängergehäusen 6 in symmetrischer Anordnung gegeneinandergestellt vorgesehen, wobei beide Empfänger 4 auf ein gemeinsames Streulichtzentrum 2 gerichtet sind. Im Vergleich zu der Anordnung nach Figur 3 fehlen die Lichtquellen 11. Der eine Empfänger 4 mißt das Streulicht der Lichtquellen 9 in Rückwärtsrichtung, der andere Empfänger 4 in Vorwärtsrichtung. Man erkennt, daß sich zwar die Anzahl der Emfänger 4 verdoppelt, jedoch Lichtquellen einsparen lassen, insbesondere dann, wenn eine Mehrzahl von Lichtquellen unter unterschiedlichen Winkeln vorgesehen sind. Auch hier schauen die Empfänger 4 in Richtung der Achse 5, sind also gleichsam in ein schwarzes Loch hinein gerichtet, sodaß die Genauigkeit der Messung durch vagabundierende Streulichtstrahlung und/oder im Gehäuse reflektierte Lichtstrahlen nicht beeinträchtigt wird.

In Figur 5 ist am Beispiel eines Rauchmelders eine zugehörige Steuereinrichtung 15 sowie wesentliche Teile einer Auswerteeinrichtung 16 dargestellt und verdeutlicht. Die Steuereinrichtung 15 weist einen Stromversorgungsteil 17 und eine damit verbundene Umschaltautomatik 18 auf, die einen Schalter 19 besitzt, mit dem alternativ die Lichtquellen 8 für eine 90°-Messung oder weitere Lichtquellen 12 für eine 20°-Vorwärtsmessung über entsprechende Leitungen 20 und 21 eingeschaltet werden. Der Empfänger 4 ist über eine Leitung 22 mit einem Verstärker 23 verbunden, von dem eine Leitung 24 zu einer Umschaltautomatik 25 führt, die Bestandteil der Auswerteeinrichtung 16 ist. Auch die Umschaltautomatik 25 besitzt einen Schalter 26 zum Schalten der empfangenen Streulichtimpulse. Ein über eine Leitung 27 angeschlossener Grenzwertmelder 28 ist auf die 90°-Streuung abgestimmt. Eine Leitung 29 führt zu einem Grenzwertmelder 30, der auf die 20°-Vorwärtsstreuung ausgerichtet ist. Leitungen 31 und 32 führen von den betreffenden Grenzwertmeldern 28 bzw. 30 zu einer Alarmeinrichtung 33, um im Brandfalle den entstehenden Rauch zu melden. Eine Leitung 34 verbindet die beiden Umschaltautomatiken 18 und 25 und sorgt für eine entsprechende Synchronisierung, so daß die Zuordnung der von den Lichtquellen 8 bzw. 12 ausgesandten Lichtstrahlen zu den vom Empfänger 4 empfangenen betreffenden Streulichtimpulsen vorgenommen werden kann. In diesem Ausführungsbeispiel schalten die beiden Umschaltautomatiken 18 und 25 beispielsweise mit einer Frequenz von 1 Hz zwischen den Lichtquellen 8 und 12 permanent hin und her. Über die Streulichtimpulse von Lichtstrahlen aus den Lichtquellen 8 wird der Feinpartikelbereich der Luftverschmutzung bestimmt. Bei einem beginnenden Schwelbrand beispielsweise werden sehr feine Rauche erzeugt, bei denen der Grenzwertmelder 28 anspricht und insoweit die Alarmeinrichtung 33 auslöst. Wenn dagegen beide Grenzwertmelder 28 und 30 gleichzeitig ansprechen, kann über die Alarmeinrichtung 33 ein anderes Alarmsignal ausgesteuert werden, weil über die Streulichtimpulse der Lichtstrahlen aus den Lichtquellen 12 auf das Vorhandensein im Durchmesser größerer Partikel geschlossen werden kann, die von einer anderen Staubquelle stammen können, die nicht infolge eines Brandes aufgetreten ist. Insoweit ist es möglich, zwischen verschiedenen Quellen der Stäube zu unterscheiden.

Figur 6 verdeutlicht die Anwendung der Vorrichtung als Aerosolphotometer für die Filterprüfung. Es sind hier in Verbindung mit der Vorrichtung gemäß Figur 1 lediglich Lichtquellen 11 vorgesehen, deren Lichtstrahlen unter einem Winkel von 45° auf das Streulichtzentrum gerichtet sind. In entsprechender Relativanordnung sind Lichtfallen 35 am Gehäuse 1 verwirklicht. Die Steuereinrichtung 15 weist eine Stromversorgung 17 für die Lichtquellen auf, die über Leitungen 36 gespeist werden. Vom Verstärker 23 der Auswerteeinrichtung 16 führt eine Leitung 37 zu einem Digital-Voltmeter 38 und eine Leitung 39 zu einem Schreiber 40.

Mit dieser Vorrichtung gemäß Figur 6 kann z. B. eine Filterprüfung mit einem Testaerosol durchgeführt werden. Als Testaerosol kann z. B. Paraffinölnebel mit bekannter Partikelgrößenverteilung und definiertem Brechungsindex eingesetzt werden. Daher hat das Photometer lediglich die Aufgabe, die Konzentration des Aerosols zu bestimmen. Hierzu werden die Lichtquellen 11 benutzt, die als monochromatische Lichtquellen angeordnet sind und radialsymmetrisch auf dem Umfang des Gehäuses 1 zu der Rohrachse, die zugleich die Achse 5 des Empfängers 4 bildet, angeordnet sind. Obwohl nur zwei Lichtquellen 11 dargestellt sind, versteht es sich, daß ihre Anzahl größer als zwei ist und die Lichtquellen 11 über den Umfang des rohrförmigen Gehäuses 1 verteilt vorgesehen sind. Wegen der hohen Lichtintensität können Laserdioden als Lichtquellen verwendet werden. Die Lichtquellen 11 sind auch hier auf das gemeinsame Streulichtzentrum 2 fokussiert und erzeugen eine hohe Leuchtdichte, mit der auch eine geringe Aerosolkonzentration hinter dem Filterprüfling sicher nachgewiesen werden kann. Bei der Filterprüfung wird der Durchlaßgrad des Filters als das Verhältnis der Aerosolkonzentration vor und hinter dem Filter bestimmt. Um Störlicht durch Lichtreflexion an den Wänden des Gehäuses 1 zu vermeiden, sind die Lichtfallen 35 vorgesehen.

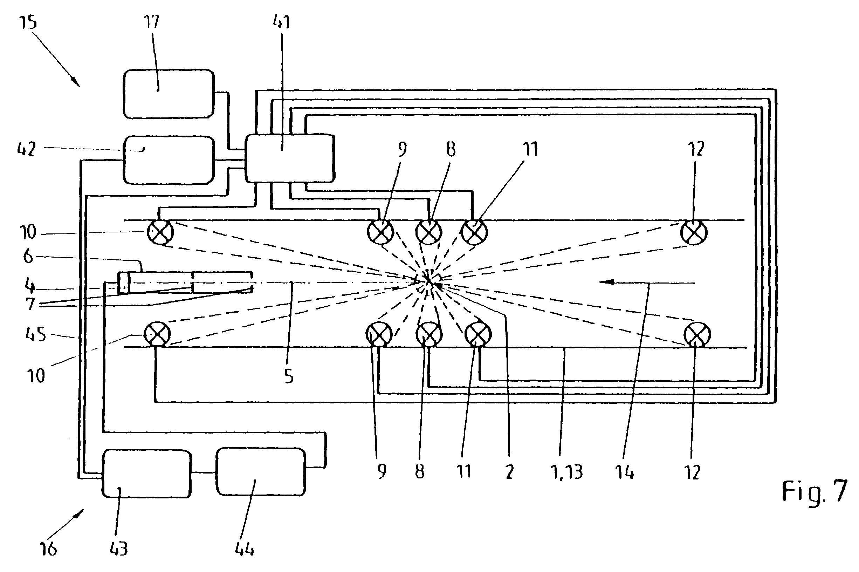

Figur 7 verdeutlicht ein Ausführungsbeispiel eines universellen Streulichtmeßgerätes. Auch hierbei sind wieder mehrere Lichtquellen 8, 9, 10, 11, 12 vorgesehen, wobei die Winkel gegenüber dem Ausführungsbeispiel gemäß Figur 3 geändert sein können. Die Lichtstrahlen sämtlicher Lichtquellen sind auf ein Streulichtzentrum 2 gerichtet. Die Streulichtimpulse in Richtung der Achse 5 werden mit dem Empfänger 4 aufgefangen. Die Steuereinrichtung 15 weist das Stromversorgungsteil 17, einen Multiplexer 41 und einen Impulsgenerator 42 auf, die miteinander sowie mit den Lichtquellen 8, 9, 10, 11, 12 in der ersichtlichen Weise durch Leitungen verbunden sind. Zu der Auswerteeinrichtung 16 gehört ein Mikroprozessor 43 sowie ein A/D-Wandler 44, der mit dem Empfänger 4 verbunden ist. Eine Datenleitung 45 verbindet den Multiplexer 41 mit dem Mikroprozessor 43.

Mit diesem universellen Streulichtmeßgerät können die Streulichtimpulse in Vorwärts- wie auch in Rückwärtsstreuung aufgenommen werden, um diese zur Bestimmung der Größe und der Größenverteilung der Partikel zu nutzen. Die aufgezeigten Winkelbereiche sind jeweils mit zwei monochromatischen Lichtquellen 8, 9, 10, 11 oder 12 bestückt. Die Lichtquellen senden Lichtstrahlen unterschiedlicher Wellenlänge aus. Obwohl nur jeweils zwei Lichtquellen, z. B. Lichtquellen 8, dargestellt sind, sind weitere Lichtquellen 8 vorgesehen, die radialsymmetrisch zu der Achse des Rohrabschnittes 13 angeordnet sind. Das Trägermedium mit den Partikeln strömt in Richtung des Pfeiles 14 durch den Rohrabschnitt 13. Die Streulichtimpulse gelangen in Richtung der Achse 5 auf den Empfänger 4, dessen Gesichtsfeldwinkel auf den Nahbereich um die Achse des Rohrabschnittes 13 eingeschränkt ist. Der Impulsgenerator 42 liefert auf Anforderung durch den Mikroprozessor 43 einen Impuls, dessen Impulsbreite die jeweilige Einschaltdauer der Lichtquellen 8, 9, 10, 11 oder 12 bestimmt. Mit Hilfe des Multiplexers 41 wählt der Mikroprozessor 43 diejenigen Lichtquellen aus, die während der Impulsdauer eingeschaltet sein sollen. Die momentan eingeschalteten Lichtquellen beleuchten die im Streuzentrum 2 befindlichen Partikel 3, die das Licht streuen. Die Streulichtimpulse werden von dem Empfänger 4 in elektrische Impulse umgewandelt, deren Breite von der Einschaltzeit der Einschaltdauer der Lichtquellen bestimmt wird. Die Streulichtimpulse werden mit einem Verstärker verstärkt. Die Höhe der Impulse ist ein Maß für die Streulichtintensität. Der A/D-Wandler 44 liefert den digitalen Wert der Impulshöhe zum Mikroprozessor 43, der gleichzeitig als Speicher ausgebildet ist. Auf diese Weise schaltet der Mikroprozessor 43 während einer Impulsdauer gleichzeitig alle Lichtquellen ein, die zu dem selben Winkelbereich gehören, beispielsweise alle Lichtquellen 8 oder alle Lichtquellen 9. Dabei können auch solche Lichtquellen ausgewählt werden, die gleiche Wellenlänge besitzen. Beim nächsten Impuls schaltet der Mikroprozessor 43 andere Lichtquellen des gleichen Streuwinkelbereichs mit anderen Wellenlängen ein, z. B. andere Lichtquellen 8. Bei dem darauf folgenden Impuls kann ein Umschaltung von den Lichtquellen 8 auf die Lichtquellen 9 erfolgen, wobei zunächst wieder einige Lichtquellen 9 mit einer ersten Wellenlänge eingeschaltet werden und dann andere Lichtquellen 9 mit anderen Wellenlängen. Es werden jeweils die Höhen der Streulichtimpulse abgespeichert. In einer zyklischen Folge speichert somit der Mikroprozessor 43 die Streulichtimpulse der jeweiligen Lichtquellen, die in den jeweiligen Winkeln angeordnet sind, ab. Er berechnet, nachdem alle Lichtquellen durchlaufen sind, die Größe bzw. die Größenverteilung der Partikel mit Hilfe der Streulichttheorie und gibt das Ergebnis aus. Sodann kann sich die zyklische Folge wiederholen. Die Impulsfolge der zyklischen Folge ist sehr groß im Verhältnis zur Aufenthaltsdauer der Partikel 3 im Streulichtzentrum 2. Dies bedeutet, daß von einem Partikel 3 eine Vielzahl von Streulichtimpulsen abgefragt und gespeichert werden können.

### BEZUGSZEICHENLISTE

- 1 -: Gehäuse
- 2 -: Streulichtzentrum
- 3 -: Partikel
- 4 -: Empfänger
- 5 -: Achse
- 6 -: Empfängergehäuse
- 7 -: Blende
- 8 -: Lichtquelle
- 9 -: Lichtquelle
- 10 -: Lichtquelle
- 11 -: Lichtquelle
- 12 -: Lichtquelle
- 13 -: Rohrabschnitt
- 14 -: Pfeil
- 15 -: Steuereinrichtung
- 16 -: Auswerteeinrichtung
- 17 -: Stromversorgungsteil
- 18 -: Umschaltautomatik
- 19 -: Schalter
- 20 -: Leitung
- 21 -: Leitung
- 22 -: Leitung
- 23 -: Verstärker
- 24 -: Leitung
- 25 -: Umschaltautomatik
- 26 -: Schalter
- 27 -: Leitung
- 28 -: Grenzwertmelder
- 29 -: Leitung
- 30 -: Grenzwertmelder
- 31 -: Leitung
- 32 -: Leitung
- 33 -: Alarmeinrichtung
- 34 -: Leitung
- 35 -: Lichtfalle
- 36 -: Leitung
- 37 -: Leitung
- 38 -: Digital-Voltmeter
- 39 -: Leitung
- 40 -: Schreiber
- 41 -: Multiplexer
- 42 -: Impulsgenerator
- 43 -: Mikroprozessor
- 44 -: A/D-Wandler
- 45 -: Datenleitung

## Patentansprüche

1. Vorrichtung zur Messung der Lichtstreuung an in einem Trägermedium suspendierten Partikeln (3) zur Ermittlung der Dichte, der Größe oder der Größenverteilung der Partikel,
- mit mindestens einer Lichtquelle (8, 9, 10, 11, 12), die Lichtstrahlen auf ein Streulichtzentrum (2) in dem Trägermedium mit den darin suspendierten Partikeln (3) richtet,
- mit einem Empfänger (4) für einen Teil des im Streulichtzentrum entstehenden Streulichts und
- mit einer dem Empfänger (4) nachgeordneten Auswerteeinrichtung (16),
- wobei eine gestreckt ausgebildete Detektionskammer vorgesehen ist, die in radialer Richtung zu ihrer Mittelachse von der Wandung eines Gehäuses (1) begrenzt wird,
- wobei das Gehäuse (1) zugleich eine Leitung für das durchströmende Trägermedium mit den Partikeln (3) bildet,
- wobei die bzw. jede Lichtquelle (8, 9, 10, 11, 12) an der Wandung des Gehäuses (13) angeordnet und auf die Mittelachse der Detektionskammer ausgerichtet ist, so daß das Streulichtzentrum (2) in einem Bereich um die Mittelachse der Detektionskammer ausgebildet wird,
- wobei der Empfänger (4) mit seiner Achse (5) koaxial zu der Mittelachse der Detektionskammer ausgerichtet ist,
- wobei dem Empfänger (4) eine Blendenanordnung (6, 7) derart zugeordnet ist, daß der Gesichtsfeldwinkel des Empfängers (4) nicht die das Streulichtzentrum (2) umgebende Wandung des Gehäuses (1) sondern nur einen engen Bereich um die Mittelachse der Detektionskammer erfaßt,
**dadurch gekennzeichnet**, daß das Gehäuse (1) von einem Rohrabschnitt (13) gebildet wird und daß die Blendenanordnung ein gestreckt ausgebildetes Empfängergehäuse (6) aufweist, das in die Detektionskammer in dem Rohrabschnitt (13) hineinragt, wobei der Empfänger (4) an einem Ende des Empfängergehäuses (6) und eine Blende (7) an dessem anderen Ende angeordnet ist.

2. Vorrichtung nach Anspruch 1, **dadurch gekennzeichnet**, daß die Blendenanordnung mehrere Blenden (7) aufweist, die über das Empfängergehäuse (6) verteilt angeordnet sind.

3. Vorrichtung nach Anspruch 1 oder 2, **dadurch gekennzeichnet**, daß mehrere über die Wandung des Gehäuses (1) verteilt angeordnete Lichtquellen (8, 9, 10, 11, 12) vorgesehen sind.

4. Vorrichtung nach Anspruch 3, **dadurch gekennzeichnet**, daß mindestens zwei Lichtquellen (8, 9, 10, 12) in unterschiedlichen Winkeln zu der gemeinsamen Achse (5) der Detektionskammer und des Empfängers (4) ausgerichtet sind.

5. Vorrichtung nach Anspruch 4, **dadurch gekennzeichnet**, daß die Lichtquellen (8, 9, 10, 12) derart angeordnet sind, daß der Empfänger (4) sowohl die Vorwärtsstreuung als auch die Rückwärtsstreuung an den Partikeln (3) erfaßt.

6. Vorrichtung nach einem der Ansprüche 3 bis 5, **dadurch gekennzeichnet**, daß mindestens zwei Lichtquellen (8, 9, 10, 11, 12) auf ein gemeinsames Streulichtzentrum (2) hin ausgerichtet sind.

7. Vorrichtung nach einem der Ansprüche 1 bis 6, **dadurch gekennzeichnet**, daß mindestens zwei monochromatische Lichtquellen (8, 9, 10, 11, 12) vorgesehen sind, die Lichtstrahlen mit unterschiedlichen Wellenlängen aussenden.

8. Vorrichtung nach einem der Ansprüche 4 bis 7, **dadurch gekennzeichnet**, daß die Lichtquellen (8, 9, 10, 11, 12) gepulste Lichtstrahlen aussenden und daß eine Steuereinrichtung (15) für den zeitlichen Ablauf der gepulsten Lichtstrahlen nacheinander und die Zuordnung zu den zugehörigen Signalen des Empfängers (4) vorgesehen ist.

9. Vorrichtung nach einem der Ansprüche 1 bis 8, **dadurch gekennzeichnet**, daß als Lichtquellen (8, 9, 10, 11, 12) Laserdioden oder Leuchtdioden vorgesehen sind.

## Claims

1. Device for measuring light scatter by particles (3) suspended in a carrier medium for determining the density, the size or the size distribution of the particles, the device comprising
- at least one light source (8, 9, 10, 11, 12) which directs beams of light towards a light-scattering centre (2) in the carrier medium with the particles (3) suspended therein;
- a receiver (4) for a portion of the scattered light from the light-scattering centre; and
- an evaluating device (16) connected downstream of the receiver (4),
- wherein an elongated detection chamber is provided, which is bounded radially around its central axis by a wall of a housing (1),
- wherein the housing (1) also acts as a duct for the through-flowing carrier medium with the particles,
- wherein said or each light source (8, 9, 10, 11,12) is arranged at the wall of the housing (13) and points to the central axis of the detection chamber so that the light-scattering centre (2) is formed in a region around the central axis of the detection chamber,
- wherein the axis (5) of the receiver (4) is coaxial with the central axis of the detection chamber,
- wherein an diaphragm system (6, 7) is associated with the receiver (4) in such a way that the angle of view of the receiver (4) does not cover the wall of the housing (1) surrounding the light-scattering centre (2) but only a narrow region around the central axis of the detection chamber, **characterized in** that the housing (1) is formed by a tube section (13) and that the diaphragm system comprises an elongated receiver housing (6) which projects into the tube section (13), wherein the receiver is arranged at one end of the receiver housing (6) and a diaphragm (7) is arranged at its other end.

2. Device according to claim 1, **characterized in** that the diaphragm system comprises several diaphragms (7) which are distributed over the receiver housing (6).

3. Device according to claim 1 or 2, **characterized in** that several light sources (8, 9, 10, 11, 12) are provided which are distributed over the wall of the housing (1).

4. Device according to claim 3, **characterized in** that at least two light sources (8, 9, 10, 12) point at different angles to the common axis (5) of the detection chamber and the receiver (4).

5. Device according to claim 4, **characterized in** that the light sources (8, 9, 10, 12) are arranged in such a way that the receiver (4) covers the forward scatter as well as the backward scatter by the particles (3).

6. Device according to any of the claims 3 to 5, **characterized in** that at least two light sources (8, 9, 10, 11, 12) are directed towards a common light-scattering centre (2).

7. Device according to any of the claims 1 to 6, **characterized in** that at least two monochromatic light sources (8, 9, 10, 11, 12) are provided which emit beams of light of different wave lengths.

8. Device according to any of the claims 4 to 7, **characterized in** that the light sources (8, 9, 10, 11, 12) emit pulsed beams of light, and that a control device (15) is provided for the timing of the pulsed beams of light and for their assignment to the associated signals of the receiver (4).

9. Device according to any of the claims 1 to 8, **characterized in** that laser diodes or light emitting diodes are provided as light sources (8, 9, 10, 11, 12).

## Revendications

1. Dispositif pour la mesure de la dispersion de lumière sur des particules (3) en suspension dans un fluide porteur, afin de déterminer la densité, les dimensions ou la distribution des dimensions des particules,
- comportant au moins une source lumineuse (8, 9, 10, 11, 12), qui dirige des rayons lumineux vers un centre de lumière diffusée (2) dans le fluide porteur avec les particules (3) en suspension dans celui-ci,
- comportant un récepteur (4) pour une partie de la lumière diffusée, se formant dans le centre de lumière diffusée et
- comportant un dispositif d'exploitation (16) monté en aval du récepteur (4),
- une chambre de détection allongée, qui est délimitée radialement vers son axe médian par la paroi d'un boîtier (1), étant prévue,
- le boîtier (1) formant en même temps un guide pour le fluide porteur le traversant avec les particules (3),
- la où chaque source lumineuse (8, 9, 10, 11, 12) étant placée sur la paroi du boîtier (13) et orientée vers l'axe médian de la chambre de détection, de sorte que le centre de lumière diffusée (2) est formé dans une zone entourant l'axe médian de la chambre de détection,
- le récepteur (4) avec son axe (5) étant orienté coaxialement à l'axe médian de la chambre de détection,
- au récepteur (4) étant associé un dispositif à diaphragmes (6, 7) de telle manière que l'angle de champ visuel du récepteur (4) n'englobe pas la paroi du boîtier (1), entourant le centre de lumière diffusée (2), mais seulement une zone étroite autour de l'axe médian de la chambre de détection,
caractérisé en ce que le boîtier (1) est formé par une section de tube (13) et en ce que le dispositif à diaphragmes comporte un boîtier de récepteur (6) allongé, qui pénètre dans la chambre de détection, dans la section de tube (13), le récepteur (4) étant disposé à une extrémité du boîtier de récepteur (6) et un diaphragme (7) à son autre extrémité.

2. Dispositif selon la revendication 1, caractérisé en ce que le dispositif à diaphragmes comporte plusieurs diaphragmes (7), qui sont répartis sur le boîtier de récepteur (6).

3. Dispositif selon la revendication 1 ou 2, caractérisé en ce que sont prévues plusieurs sources lumineuses (8, 9, 10, 11, 12) réparties sur la paroi du boîtier (1).

4. Dispositif selon la revendication 3, caractérisé en ce qu'au moins deux sources lumineuses (8, 9, 10, 12) sont orientées sous différents angles par rapport à l'axe commun (5) de la chambre de détection et du récepteur (4).

5. Dispositif selon la revendication 4, caractérisé en ce que les sources lumineuses (8, 9, 10, 12) sont disposées de manière que le récepteur (4) détecte aussi bien la dispersion avant que la dispersion arrière sur les particules (3).

6. Dispositif selon l'une des revendications 3 à 5, caractérisé en ce qu'au moins deux sources lumineuses (8, 9, 10, 11, 12) sont orientées vers un centre de lumière diffusée (2) commun.

7. Dispositif selon l'une des revendications 1 à 6, caractérisé en ce que sont prévues au moins deux sources lumineuses monochromatiques (8, 9, 10, 11, 12), qui émettent des rayons lumineux de longueurs d'ondes différentes.

8. Dispositif selon l'une des revendications 4 à 7, caractérisé en ce que les sources lumineuses (8, 9, 10, 11, 12) émettent des rayons lumineux pulsés et en ce qu'un dispositif de commande (15) est prévu pour la séquence temporelle des rayons lumineux pulsés l'un après l'autre et pour l'affectation aux signaux correspondants du récepteur (4).

9. Dispositif selon l'une des revendications 1 à 8, caractérisé en ce que des diodes laser ou des diodes électroluminescentes sont prévues en tant que sources lumineuses (8, 9, 10,11, 12).
